# FASCICULE DE BREVET EUROPEEN

(11) **EP 1 673 530 B1**
(45) Date de publication et mention de la délivrance du brevet: **26.11.2008**
(21) Numéro de dépôt: 04787478.9
(22) Date de dépôt: 29.09.2004
(51) Int. Cl.: F02K 1/76

(54) **VERROU POUR INVERSEUR DE POUSSEE, MUNI D'UN DISPOSITIF DE BLOQUAGE**
SCHUBUMKEHRERVERRIEGELUNG MIT VERRIEGELUNGSVORRICHTUNG
THRUST REVERSER LOCK COMPRISING LOCKING DEVICE

(30) Priorité: 06.10.2003 FR 0311651
(43) Date de publication de la demande: 28.06.2006
(73) Titulaire: AIRCELLE, 76700 Gonfreville l'Orcher (FR)
(72) Inventeur: ROUYER, Pascal, F-76430 Saint Romain de Colbosc (FR)
(74) Mandataire: Gaillarde, Frédéric F. Ch.
(86) Numéro de dépôt international: PCT/FR2004/002459
(87) Numéro de publication internationale: WO 2005/035964

(56) Documents cités:
- EP-A- 0 542 611
- EP-A- 0 997 630
- US-A- 4 437 783
- US-A- 5 257 840
- US-A- 5 904 041

## Description

La présente invention se rapporte à un verrou destiné à être implanté dans un inverseur de poussée utilisé dans l'aéronautique et plus particulièrement à un verrou tertiaire dont la fonction est d'éviter tout déplacement intempestif des parties mobiles d'un inverseur de poussée à la suite de la mise hors service des verrous principaux habituellement disposés sur le cadre avant dudit inverseur de poussée.

Une autre demande de brevet (EP-A-0542611) décrit un verrou de l'art intérieur.

Un verrou de ce type est décrit dans la demande de brevet FR 2 830 051, et comprend un pêne destiné à être positionné par défaut dans l'alignement d'une glissière solidaire d'une poutre fixe longitudinale. Cette glissière constitue un moyen de guidage pour un rail rattaché aux parties mobiles de l'inverseur de poussée. Lorsque ce dernier doit fonctionner, l'ordre de commande est émis depuis la cabine de pilotage et le pêne est alors amené à passer d'une position verrouillée, dans laquelle il fait obstacle au déplacement du rail dans le sens de l'ouverture, à une position d'ouverture.

Il est également connu de rapporter un levier de commande sur un verrou tertiaire afin de permettre au personnel de maintenance de tester ce dernier au sol et de vérifier que les moyens constitutifs sont intègres et correctement agencés. Cependant, un inconvénient réside dans le fait que le levier de commande n'est pas bloqué en rotation et qu'une ouverture intempestive du verrou en vol est toujours à craindre. De plus, ce verrou n'intègre aucun moyen de visualisation, repérable depuis l'extérieur, permettant d'indiquer si le pêne est en position de verrouillage ou d'ouverture.

La présente invention a pour but de remédier aux inconvénients cités précédemment, et consiste pour cela en un verrou comprenant notamment un pêne et un organe de liaison auquel est rattaché un levier de commande, ledit pêne étant apte, sous l'action du levier de commande sur l'organe de liaison, à passer alternativement d'une position de verrouillage à une position d'ouverture, caractérisé en ce que le levier de commande comporte une fente sensiblement perpendiculaire à l'axe du levier de commande, cette fente présentant successivement une section d'engagement, une section d'étranglement, et une section d'extrémité élargie, et en ce qu'une tige de blocage mobile en translation longitudinale à l'encontre d'un organe élastique est disposée parallèlement à l'axe de rotation du levier de commande, ladite tige de blocage étant pourvue d'un rétrécissement de section inférieure à la section d'étranglement de la fente de façon à ce que, lorsque ce rétrécissement est positionné à l'aplomb de la fente à la suite d'un déplacement en translation de la tige de blocage, le levier de commande puisse passer alternativement d'une position de blocage, dans laquelle la tige de blocage est prisonnière de la section d'extrémité de la fente, à une position d'ouverture, dans laquelle la fente est désengagée de la tige de blocage.

Ainsi, tout risque d'ouverture intempestive est annihilé puisque le déverrouillage manuel n'est possible que si plusieurs actions sont menées simultanément En effet, le déverrouillage ne peut être réalisé que si, d'une part, le rétrécissement de la tige de blocage est maintenu à l'aplomb de la section d'étranglement de la fente, et d'autre part, le levier de commande est entraîné en rotation autour de son axe de rotation. Une fois que la fente du levier de commande est désengagée de la tige de blocage, cette dernière est alors relâchée et vient se placer en position de repos sous l'action de organe élastique qui tend à retrouver sa forme originelle. Le personnel de maintenance peut alors facilement constater depuis l'extérieur si le verrou est ouvert ou fermé en visualisant le positionnement de la tige de blocage. Enfin, une fois que le personnel de maintenance a vérifié l'intégrité de chaque élément constitutif du verrou, il peut être procédé à la fermeture du verrou de façon similaire par actions simultanées sur la tige de blocage et le levier de commande.

Selon un mode de réalisation préféré de l'invention, la section d'extrémité de la fente est sensiblement circulaire, et le rétrécissement de la tige de blocage est situé dans le prolongement d'un tronçon conique dont le plus grand diamètre est supérieur à celui de la section d'extrémité. Ceci permet alors d'éviter qu'un jeu ne s'installe entre la section d'extrémité et la partie de tige de blocage traversant ladite section d'extrémité.

Avantageusement, la tige de blocage comporte une gorge apte à recevoir la section d'engagement de la fente lorsque l'organe élastique est au repos. Par conséquent, en position d'ouverture, la section d'engagement du levier de commande peut être rabattue dans la gorge de la tige de blocage et interdire à cette dernière tout déplacement en translation. De préférence, la section d'engagement du levier est sensiblement circulaire et le diamètre de la section d'engagement est supérieur à celui de la section d'extrémité. Il doit être bien compris qu'en l'absence d'une telle gorge, la section d'engagement se confond avec la section d'étranglement.

Avantageusement encore, la tige de blocage comporte une fenêtre longitudinale dont la longueur est au moins égale à la distance maximale pouvant être parcourue en translation par ladite tige de blocage. Cette fenêtre longitudinale peut être traversée par un téton solidaire d'une partie fixe dudit verrou afin d'éviter que la tige de blocage ne puisse pivoter autour de son axe longitudinal.

Préférentiellement, l'organe élastique prend appui sur une bague de retenue positionnée autour de la tige de blocage.

De plus, la tige de blocage peut présenter, d'une part, une première extrémité profilée prévue pour s'adapter à l'aérodynamique des lignes externes de l'inverseur de poussée associé, et d'autre part, une seconde extrémité élargie apte à venir en butée contre une partie fixe dudit verrou.

L'invention sera mieux comprise à l'aide de la description détaillée qui est exposée ci-dessous en regard du dessin annexé dans lequel :
La figure 1 est une vue en perspective d'un verrou selon l'invention en position de blocage.
La figure 2 est une vue schématique en coupe selon la ligne II-II du verrou représenté à la figure 1.
La figure 3 est une vue en coupe selon la ligne III-III du verrou représenté à la figure 2.
La figure 4 est une vue en perspective éclatée de la tige de blocage et du levier de commande associé.
La figure 5 est une vue similaire à celle de la figure 1 lorsque le verrou a été ouvert manuellement.
La figure 6 est une vue similaire à celle de la figure 2 lorsque le verrou a été ouvert manuellement.
La figure 7 est une vue similaire à celle de la figure 3 lorsque le verrou a été ouvert manuellement.

Un verrou 1 selon la présente invention, tel que représenté aux figues 1 à 3 et 5 à 7, est un verrou tertiaire destiné à être intégré dans un inverseur de poussée placé autour d'un moteur d'un aéroplane, et comprend un corps 2 dans lequel sont notamment logés un pêne 3 et un organe de liaison 4.

Plus précisément, le pêne 3 est constitué par une pièce monobloc apte à pivoter autour d'un pivot 5 et présentant, d'une part, un organe de blocage 6 faisant saillie du corps 2 lorsque le verrou 1 est en position de fermeture, et d'autre part, un bec 7 destiné à coopérer avec l'organe de liaison 4. Ce pêne 3 est solidaire d'une butée de déclenchement 8 disposée à l'extérieur du corps 2. Cette butée de déclenchement 8 est montée autour d'un ressort de torsion (non représenté) qui tend en permanence à faire pivoter cette dernière, et donc le pêne 3, dans le sens des aiguilles d'une montre.

L'organe de liaison 4 est réalisé à partir d'une paire de bielles 9 parallèles qui sont chacune, au niveau de leur première extrémité, rattachées à un même axe de rotation 10 logé dans le corps 2. Cet axe de rotation 10 est pourvu d'une butée 18 disposée en regard d'une tige de piston 12 commandée par un moteur hydraulique 13. Ces deux bielles 9 sont par ailleurs rendues solidaires l'une de l'autre, au niveau de leur seconde extrémité, par l'intermédiaire d'une tringle 11 parallèle à l'axe de rotation 10. Ce dernier comporte une extrémité 14 de section rectangulaire faisant saillie à l'extérieur du corps 2.

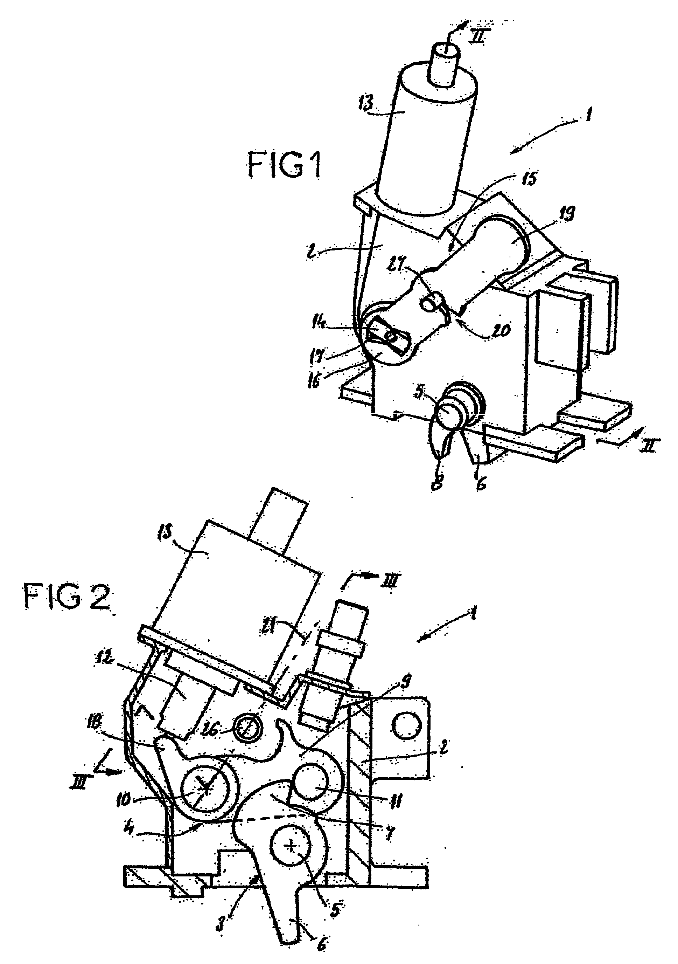

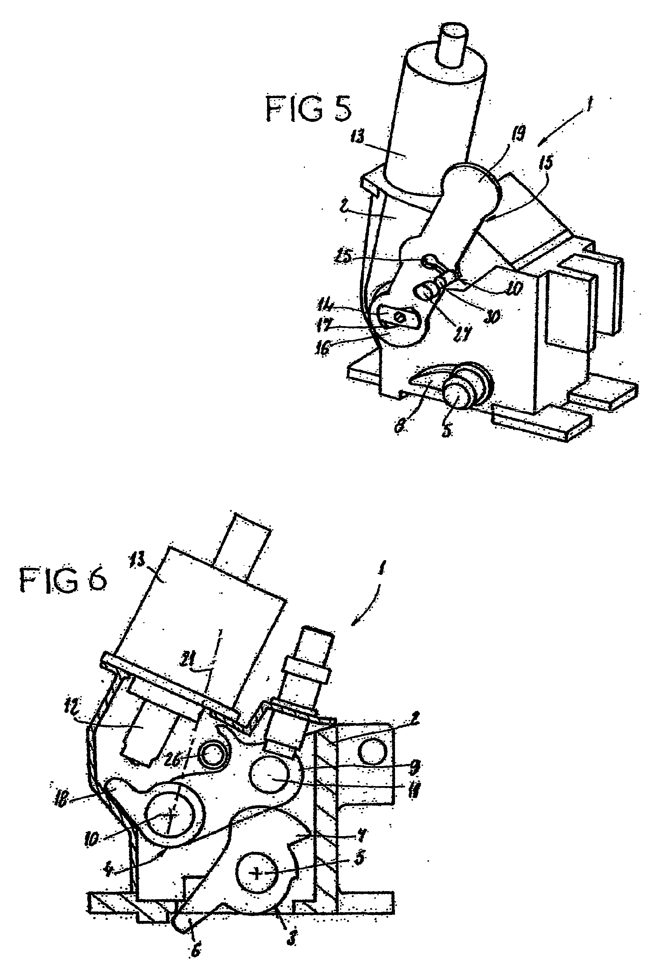

Comme représenté plus précisément aux figures 1 et 5, un levier de commande 15 distinct du corps 2 est rapporté sur l'axe de rotation 10 et se décompose, d'une part, en une tête 16 dotée d'une ouverture 17 en forme de noeud papillon positionnée autour de l'extrémité 14 de l'axe de rotation 10, et d'autre part, en un manche 19 muni d'une fente 20 sensiblement perpendiculaire à l'axe 21 du levier de commande 15. Plus précisément, cette fente 20 présente successivement une section d'engagement 22 élargie circulaire, une section d'étranglement 24 sensiblement droite, et une section d'extrémité 25 élargie circulaire. Le diamètre de la section d'engagement 22 est choisi supérieur à celui de la section d'extrémité 25. Un ressort de torsion (non représenté) est positionné autour de l'axe de rotation 10 et tend en permanence à faire pivoter ce dernier, ainsi que le levier de commande 15, dans le sens des aiguilles d'une montre.

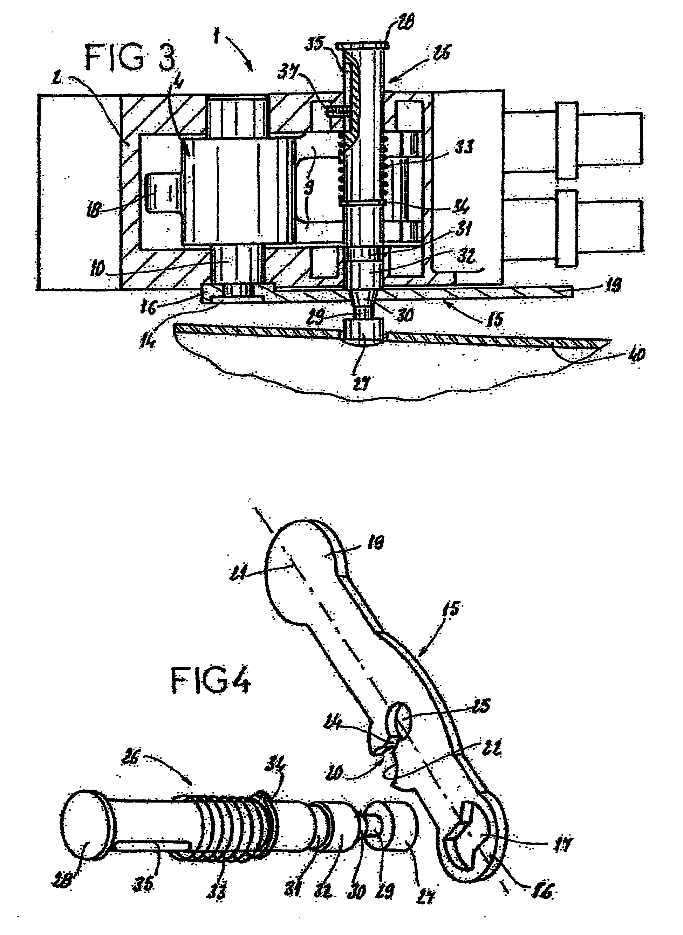

Une tige de blocage 26 est également incorporée dans le corps 2 et est disposée parallèlement à l'axe de rotation 10. Comme représenté plus précisément aux figures 3, 4 et 7, cette tige de blocage 26 comprend notamment une première extrémité 27 profilée de couleur qui, d'une part, débouche au ras d'un alésage réalisé dans les lignes externes 40 de l'inverseur de poussée, et d'autre part, s'adapte parfaitement à l'aérodynamique de ces dernières lorsque le verrou 1 est en position de blocage. La tige de blocage 26 comprend également une seconde extrémité 28 plate possédant un diamètre supérieur à celui de la tige de blocage 26.

En se référant plus particulièrement à la figure 4, on constate que cette tige de blocage 26 présente un rétrécissement 29 cylindrique compris entre la première extrémité 27 et un tronçon conique 30 dont le diamètre en section est croissant en direction de la seconde extrémité 28. De plus, une gorge 31 est creusée dans la périphérie de la tige de blocage 26 à distance du tronçon conique 30, ladite gorge 31 étant alors séparée de ce dernier par un tronçon cylindrique 32. Le rétrécissement 29, contrairement au tronçon conique 30, est conçu de façon à pouvoir traverser la section d'étranglement 24 de la fente 20, et la gorge 31 possède un diamètre sensiblement égal à celui de la section d'engagement 22.

Un ressort 33 est positionné autour de la tige de blocage 26 et présente une extrémité en appui contre une bague de retenue 34 logée dans une rainure circulaire réalisée à milongueur de la tige de blocage 26. Cette dernière comporte par ailleurs une fenêtre 35 longitudinale s'étendant entre sa seconde extrémité 28 et l'autre extrémité du ressort 33. Cette fenêtre 35 est traversée par un téton 37 solidaire du corps 2 dont la fonction est d'empêcher toute déplacement en rotation de la tige de blocage 26 autour de son axe, sans toutefois interdire à celle-ci de se déplacer en translation longitudinale.

Lorsque le verrou 1 est en position de fermeture, comme représenté aux figures 1 à 3, le levier de commande 15 est rabattu sur la tige de blocage 26 et la section d'extrémité 25 de la fente 20 est traversée au moins partiellement par le tronçon conique 30 de ladite tige de blocage 26. Le bec 7 du pêne 3 est en butée contre la tringle 11 de l'organe de liaison 4 sous l'action de son ressort de torsion associé, et il en découle que l'organe de blocage 6 fait saillie du corps 2.

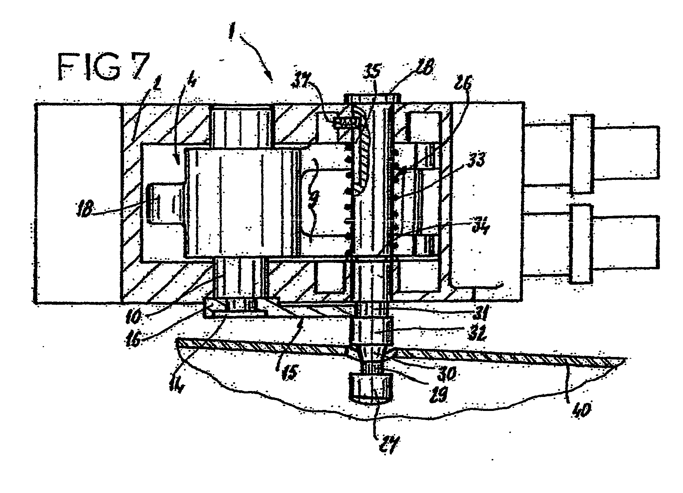

Une personne souhaitant procéder à l'ouverture manuelle du verrou 1 doit simultanément appuyer sur la première extrémité 27 de la tige de blocage 26 afin de déplacer cette dernière en translation longitudinale à l'encontre du ressort 33 jusqu'à ce que le rétrécissement 29 soit à l'aplomb de la fente 20, et se saisir du manche 19 afin d'entraîner le levier de commande 15 en rotation dans le sens trigonométrique. Il doit être noté que, compte tenu de la forme particulière de l'ouverture 17 de la tête 16 positionnée autour de l'extrémité 14 de l'axe de rotation 10, le levier de commande 15 effectue une course morte avant d'entraîner ledit axe de rotation 10. La tige de blocage 26 peut être relâchée une fois que la fente 20 a été totalement désengagée de celle-ci. Ce faisant, le ressort 33 jusqu'alors comprimé tend à retrouver sa forme originelle et force par conséquent la tige de blocage 26 à se translater en sens inverse. Comme représenté aux figures 5 et 7, la première extrémité 27 de la tige de blocage 26 fait alors saillie des lignes externes 40 de l'inverseur de poussée associé et peut être facilement repérée par le personnel de maintenance. Enfin, la personne peut lâcher le manche 19, le levier de commande 15 étant alors obligé de se rabattre sur la tige de blocage 26 sous l'action du ressort de torsion (non représenté) positionné au niveau de l'axe de rotation 10. La section d'engagement 22 de la fente 20 vient finalement se loger dans la gorge 31 de la tige de blocage, et il en résulte que cette dernière est désomais bloquée en translation longitudinale.

Pour procéder à la fermeture du verrou 1, il faut tout d'abord extraire la section d'engagement 22 de la gorge 31 et appuyer sur la première extrémité 27 de la tige de blocage 26 afin de placer le rétrécissement 29 à l'aplomb de la fente 20. Après que la butée de déclenchement 8 a été forcée à pivoter autour de son pivot 5 dans le sens trigonométrique, le levier de commande 15 peut pivoter dans le sens des aiguilles d'une montre jusqu'à ce que le rétrécissement 29 soit logé dans la section d'extrémité 25. La personne effectuant la manoeuvre peut alors, d'une part, relâcher la butée de déclenchement 8 afin que le bec 7 du pêne 3 vienne en butée contre la tringle 11 de l'organe de liaison 4 sous l'action du ressort de torsion (non représenté) placé autour du pivot 5, et d'autre part, relâcher la tige de blocage 26, cette dernière étant alors rendue mobile en translation longitudinale sous l'action du ressort 33. Le tronçon conique 30 est finalement amené à venir en butée contre la section d'extrémité 25, et il en découle que le levier de commande 15 est totalement bloqué en rotation.

Il doit être bien compris que, lors de l'atterrissage de l'aéroplane, l'ouverture du verrou 1 est réalisée de façon classique par l'intermédiaire de la tige de piston 12 du moteur hydraulique 13 qui est apte à agir sur la butée 18 présentée par l'axe de rotation 10. Dans ce cas, le levier de commande 15 demeure en permanence en position de blocage, comme représenté aux figures 1 à 3. En effet, grâce à la forme particulière de l'ouverture 17 de la tête 16 du levier de commande 15, l'extrémité 14 de l'axe de rotation 10 peut suffisamment pivoter, avant de venir en butée contre la bordure de ladite ouverture 17, pour que la tringle 11 puisque se dégager du bec 7. Le pêne 3 peut alors pivoter et l'organe de blocage 6 cesse d'obstruer la glissière associée dans laquelle peut coulisser un rail solidaire des parties mobiles de l'inverseur de poussée. De façon classique, pour procéder à la fermeture du verrou 1, il suffit de commander la rétractation de la tige de piston 12 et de remettre la butée de déclenchement 8 en place à l'aide d'un crochet rattaché aux parties mobiles de l'inverseur de poussée.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Verrou (1) destiné à être implanté dans un inverseur de poussée utilisé dans l'aéronautique, ce verrou comprenant notamment un pêne (3) et un organe de liaison (4) auquel est rattaché un levier de commande (15), ledit pêne étant apte, sous l'action du levier de commande sur l'organe de liaison, à passer alternativement d'une position de verrouillage à une position d'ouverture, **caractérisé en ce que** le levier de commande comporte une fente (20) sensiblement perpendiculaire à l'axe (21) du levier de commande, cette fente présentant successivement une section d'engagement (22), une section d'étranglement (24), et une section d'extrémité (25) élargie, et **en ce qu'**une tige de blocage (26) mobile en translation longitudinale à l'encontre d'un organe élastique (33) est disposée parallèlement à l'axe de rotation (10) du levier de commande, ladite tige de blocage étant pourvue d'un rétrécissement (29) de section inférieure à la section d'étranglement de la fente de façon à ce que, lorsque ce rétrécissement est positionné à l'aplomb de la fente à la suite d'un déplacement en translation de la tige de blocage, le levier de commande puisse passer alternativement d'une position de blocage, dans laquelle la tige de blocage est prisonnière de la section d'extrémité de la fente, à une position d'ouverture, dans laquelle la fente est désengagée de la tige de blocage.

2. Verrou (1) selon la revendication 1, **caractérisé en ce que** la section d'extrémité (25) de la fente (20) est sensiblement circulaire, et **en ce que** le rétrécissement (29) de la tige de blocage (26) est situé dans le prolongement d'un tronçon conique (30) dont le plus grand diamètre est supérieur à celui de la section d'extrémité.

3. Verrou (1) selon l'une quelconque des revendications 1 ou 2, **caractérisé en ce que** la tige de blocage (26) comporte une gorge (31) apte à recevoir la section d'engagement (22) de la fente (20) lorsque l'organe élastique (33) est au repos.

4. Verrou (1) selon l'une quelconque des revendications 1 à 3, **caractérisé en ce que** la section d'engagement (22) est sensiblement circulaire.

5. Verrou (1) selon l'une quelconque des revendications 1 à 4, **caractérisé en ce que** le diamètre de la section d'engagement (22) est supérieur à celui de la section d'extrémité (25).

6. Verrou (1) selon l'une quelconque des revendications 1 à 5, **caractérisé en ce que** la tige de blocage (26) comporte une fenêtre (35) longitudinale dont la longueur est au moins égale à la distance maximale pouvant être parcourue en translation par ladite tige de blocage.

7. Verrou (1) selon la revendication 6, **caractérisé en ce que** la fenêtre (35) longitudinale est traversée par un téton (37) solidaire d'une partie fixe dudit verrou.

8. Verrou (1) selon l'une quelconque des revendications 1 à 7, **caractérisé en ce que** l'organe élastique (33) prend appui sur une bague de retenue (34) positionnée autour de la tige de blocage (26).

9. Verrou (1) selon l'une quelconque des revendications 1 à 8, **caractérisé en ce que** la tige de blocage (26) présente une première extrémité (27) profilée prévue pour s'adapter à l'aérodynamique des lignes externes (40) de l'inverseur de poussée associé.

10. Verrou (1) selon l'une quelconque des revendications 1 à 9, **caractérisé en ce que** la tige de blocage (26) présente une seconde extrémité (28) élargie apte à venir en butée contre une partie fixe dudit verrou.

## Claims

1. Lock (1) intended to be installed in a thrust reverser used in aeronautics, said lock comprising, in particular, a bolt (3) and a linking member (4) to which a control lever (15) is connected, said bolt being able, under the action of the control lever on the linking member, to move alternately from a locking position to an open position, **characterized in that** the control lever comprises a slot (20) substantially perpendicular to the axis (21) of the control lever, this slot successively having an engagement section (22), a narrow section (24) and an enlarged end section (25), and **in that** a locking pin (26) that is mobile in longitudinal translation against an elastic device (33) is disposed parallel with the axis of rotation (10) of the control lever, said locking pin being provided with a recess (29) having a cross section smaller than that of the narrow section of the slot in order that, when this recess is positioned in line with the slot after a displacement in translation of the locking pin, the control lever can move alternately from a locking position, in which the locking pin is trapped by the end section of the slot, to an open position, in which the slot is disengaged from the locking pin.

2. Lock (1) according to Claim 1, **characterized in that** the end section (25) of the slot (20) is substantially circular, and **in that** the recess (29) of the locking pin (26) is situated in the extension of a conical section (30) whose biggest diameter is greater than that of the end section.

3. Lock (1) according to either of Claims 1 and 2, **characterized in that** the locking pin (26) comprises a groove (31) able to receive the engagement section (22) of the slot (20) when the elastic device (33) is in the rest state.

4. Lock (1) according to any one of Claims 1 to 3, **characterized in that** the engagement section (22) is substantially circular.

5. Lock (1) according to any one of Claims 1 to 4, **characterized in that** the diameter of the engagement section (22) is greater than that of the end section (25).

6. Lock (1) according to any one of Claims 1 to 5, **characterized in that** the locking pin (26) comprises a longitudinal window (35) whose length is at least equal to the maximum distance able to be traveled in translation by said locking pin.

7. Lock (1) according to Claim 6, **characterized in that** the longitudinal window (35) is traversed by a stud (37) integral with a fixed part of said lock.

8. Lock (1) according to any one of Claims 1 to 7, **characterized in that** the elastic device (33) bears on a retaining ring (34) positioned around the locking pin (26).

9. Lock (1) according to any one of Claims 1 to 8, **characterized in that** the locking pin (26) has a profiled first end (27) provided to adapt to the aerodynamics of the external lines (40) of the associated thrust reverser.

10. Lock (1) according to any one of Claims 1 to 9, **characterized in that** the locking pin (26) has an enlarged second end (28) able to butt against a fixed part of said lock.

## Patentansprüche

1. Verriegelung (1), die dazu bestimmt ist, in eine in der Luftfahrt verwendete Schubumkehrvorrichtung eingesetzt zu werden, wobei diese Verriegelung insbesondere einen Riegel (3) und ein Verbindungsorgan (4) aufweist, an dem ein Steuerhebel (15) befestigt ist, wobei der Riegel unter der Wirkung des Steuerhebels auf das Verbindungsorgan in der Lage ist, abwechselnd von einer Verriegelungsstellung in eine Öffnungsstellung überzugehen, **dadurch gekennzeichnet, dass** der Steuerhebel einen Schlitz (20) im Wesentlichen lotrecht zur Achse (21) des Steuerhebels aufweist, wobei dieser Schlitz nacheinander einen Einführquerschnitt (22), einen Verengungsquerschnitt (24) und einen verbreiterten Endquerschnitt (25) aufweist, und dass eine in Längstranslation gegen ein elastisches Organ (33) bewegliche Blockierstange (26) parallel zur Drehachse (10) des Steuerhebels angeordnet ist, wobei die Blockierstange mit einer Verjüngung (29) versehen ist, deren Querschnitt geringer als der Verengungsquerschnitt des Schlitzes ist, so dass, wenn diese Verjüngung nach einer Translationsverschiebung der Blockierstange lotrecht zu dem Schlitz positioniert ist, der Steuerhebel abwechselnd von einer Blockierstellung, in der die Blockierstange im Endquerschnitt des Schlitzes gefangen ist, in eine Öffnungsstellung übergehen kann, in der der Schlitz von der Blockierstange gelöst ist.

2. Verriegelung (1) nach Anspruch 1, **dadurch gekennzeichnet, dass** der Endquerschnitt (25) des Schlitzes (20) im Wesentlichen kreisförmig ist, und dass die Verjüngung (29) der Blockierstange (26) sich in der Verlängerung eines kegelförmigen Abschnitts (30) befindet, dessen größter Durchmesser größer als derjenige des Endquerschnitts ist.

3. Verriegelung (1) nach einem der Ansprüche 1 oder 2, **dadurch gekennzeichnet, dass** die Blockierstange (26) eine Rille (31) aufweist, die den Einführquerschnitt (22) des Schlitzes (20) aufnehmen kann, wenn das elastische Organ (33) in der Ruhestellung ist.

4. Verriegelung (1) nach einem der Ansprüche 1 bis 3, **dadurch gekennzeichnet, dass** der Einführquerschnitt (22) im Wesentlichen kreisförmig ist.

5. Verriegelung (1) nach einem der Ansprüche 1 bis 4, **dadurch gekennzeichnet, dass** der Durchmesser des Einführquerschnitts (22) größer ist als derjenige des Endquerschnitts (25).

6. Verriegelung (1) nach einem der Ansprüche 1 bis 5, **dadurch gekennzeichnet, dass** die Blockierstange (26) ein Längsfenster (35) aufweist, dessen Länge mindestens gleich der maximalen Strecke ist, die die Blockierstange in Translationsrichtung durchlaufen kann.

7. Verriegelung (1) nach Anspruch 6, **dadurch gekennzeichnet, dass** das Längsfenster (35) von einem Zapfen (37) durchquert wird, der mit einem ortsfesten Teil der Verriegelung fest verbunden ist.

8. Verriegelung (1) nach einem der Ansprüche 1 bis 7, **dadurch gekennzeichnet, dass** das elastische Organ (33) auf einem Haltering (34) aufliegt, der um die Blockierstange (26) herum positioniert ist.

9. Verriegelung (1) nach einem der Ansprüche 1 bis 8, **dadurch gekennzeichnet, dass** die Blockierstange (26) ein erstes mit Profil versehenes Ende (27) aufweist, das vorgesehen ist, um sich an die Aerodynamik der Außenlinien (40) der zugeordneten Schubumkehrvorrichtung anzupassen.

10. Verriegelung (1) nach einem der Ansprüche 1 bis 9, **dadurch gekennzeichnet, dass** die Blockierstange (26) ein zweites, erweitertes Ende (28) aufweist, das gegen einen ortsfesten Teil der Verriegelung in Anschlag kommen kann.
